# EUROPÄISCHE PATENTANMELDUNG

(11) **EP 0 995 890 A1**
(43) Veröffentlichungstag der Anmeldung: **26.04.2000**
(21) Anmeldenummer: 98811047.4
(22) Anmeldetag: 20.10.1998
(51) Int. Cl.: F02B 77/04, F16J 15/08

(54) **Zylinder für eine Brennkraftmaschine**

(71) Anmelder: Wärtsilä NSD Schweiz AG, 8401 Winterthur (CH)
(72) Erfinder: Keller, Walter, 8487 Zell (CH)
(74) Vertreter: Sulzer Management AG

(57) **Zusammenfassung**

Ein Zylinder für eine Brennkraftmaschine, insbesondere für einen Grossdieselmotor, hat einen Zylindereinsatz (2), welcher eine Lauffläche (21) für einen hin- und herbewegbaren Kolben (3) bildet, einen den Zylinder abschliessenden Zylinderdeckel (4), sowie eine zwischen dem Zylindereinsatz (2) und dem Zylinderdeckel (4) angeordnete Zylinderkopfdichtung (5). Der Innendurchmesser (C) der Zylinderkopfdichtung (5) ist kleiner ist als der Innendurchmesser (B) des Zylindereinsatzes (2).

## Beschreibung

Die Erfindung betrifft einen Zylinder für eine Brennkraftmaschine, insbesondere für einen Grossdieselmotor, gemäss dem Oberbegriff des unabhängigen Anspruchs 1.

Bei Zweitakt- und Viertakt-Dieselmotoren ist es ein bekanntes Problem, dass sich während des Betriebs an dem üblicherweise als Feuersteg bezeichneten Kolbenoberteil, welches dem Verbrennungsraum des Zylinder zugewandt ist, Ablagerungen wie Verbrennungsrückstände und Ölkohle absetzen, die sich bis auf den Bohrungsdurchmesser des Zylindereinsatzes aufbauen. Speziell bei der Verbrennung von Schweröl, das häufig als Brennstoff für Grossdieselmotoren, z. B. Schiffsmotoren, verwendet wird, ist dieser Koksaufbau besonders stark ausgeprägt. Diese harten Ablagerungen tangieren während der Hubbewegung des Kolbens die Lauffläche des Zylindereinsatzes und zerstören oder beschädigen dort den Ölschmierfilm, sodass es auf der Lauffläche zu Ölmangelzuständen kommt. Hierdurch kommt es zu einem erhöhten Verschleiss des Zylindereinsatzes. Ferner besteht die Gefahr von Kolbenfressern. Auch wird durch die Ablagerungen am Feuersteg bei jeder Hubbewegung des Kolbens Schmieröl in den Verbrennungsraum transportiert, was zum einen zu Verkokungserscheinungen im Brennraumbereich des Zylinders und zum anderen zu einem unwirtschaflich hohen Ölverbrauch führt, der sich zudem negativ auf die umweltbelastenden Emissionen des Motors auswirkt.

Dieses Problem ist als Zylinderpolieren (bore-polishing) bekannt. Es tritt sowohl bei Kreuzkopfmaschinen auf, die üblicherweise nach dem ZweitaktVerfahren arbeiten, als auch bei Tauchkolbenmaschinen, die meist nach dem Viertakt-Verfahren arbeiten. Bei letzteren ist das Problem besonders stark ausgeprägt, weil der Tauchkolbern während der Hubbewegung zusätzlich eine Kippbewegung ausführt und von einer Seite der Zylinderwand auf die andere wechselt.

Zur Lösung dieses Problems ist es beispielsweise bekannt, im oberen, dem Verbrennungsraum zugewandten Endbereich der Lauffläche ein Gewinde oder eine in Umfangsrichtung des Zylindereinsatzes verlaufende Profilierung vorzusehen, deren Innendurchmesser im wesentlichen dem Durchmesser des Kolbenunterteils entspricht. Durch diese Profilierung, in der sich die Ölkohle ablagert, wird der Aufbau der Ölkohleschicht am Feuersteg des Kolbens verhindert oder zumindest reduziert.

Mit zunehmender Betriebsdauer lagert sich immer mehr Ölkohle in der Profilierung ab. Deshalb müssen bei Wartungsarbeiten die Ablagerungen aus der Profilierung entfernt werden, was eine sehr zeitaufwendige und relativ schwierige Arbeit ist.

Der Erfindung liegt deshalb die Aufgabe zugrunde, einen Zylinder für eine Brennkraftmaschine bereitzustellen, bei dem der nachteilige Effekt des Zylinderpolierens auf andere Weise effizient vermieden oder reduziert wird und der zudem eine einfachere Wartung bzw. Revision ermöglicht.

Der diese Aufgabe lösende Zylinder für eine Brennkraftmaschine, insbesondere für einen Grossdieselmotor, ist durch die Merkmale des unabhängigen Anspruchs 1 gekennzeichnet.

Erfindungsgemäss wird also ein Zylinder für eine Brennkraftmaschine insbesondere für einen Grossdieselmotor, mit einem Zylindereinsatz, welcher eine Lauffläche für einen hin- und herbewegbaren Kolben bildet, mit einem den Zylinder abschliessenden Zylinderdeckel, sowie mit einer zwischen dem Zylindereinsatz und dem Zylinderdeckel angeordneten Zylinderkopfdichtung vorgeschlagen, wobei der Innendurchmesser der Zylinderkopfdichtung kleiner ist als der Innendurchmesser, das heisst die Bohrung des Zylindereinsatzes.

Da die Zylinderkopfdichtung einen kleineren Innendurchmesser aufweist als der Zylindereinsatz, ragt sie über die Lauffläche hinaus in den Innenraum des Zylinders und bildet somit einen Vorsprung, welcher beim Vorbeibewegen des Kolbens die Ablagerungen vom Kolben abstreift.

Erfindungsgemäss wird also die Zylinderkopfdichtung zum Abstreifen von Ablagerungen an dem Kolben einer Brennkraftmaschine, insbesondere eines Grossdieselmotors verwendet. Somit sind keine zusätzlichen Bauteile oder bauliche Massnahmen am Zylinder notwendig, um dem Zylinderpolieren entgegenzuwirken. Da die Zylinderkopfdichtung üblicherweise ein Verschleissteil ist, das bei Revisionsarbeiten am Motor sowieso ausgetauscht wird, sind zum Entfernen der Ablagerungen keine zusätzlichen aufwendigen Arbeiten, wie beispielsweise das Entfernen eingebackener Ölkohle, vonnöten. Die verbrauchte Zylinderkopfdichtung mit den an ihr anhaftenden Ablagerungen wird in einfacher Weise herausgenommen und durch eine neue ersetzt. Dies bedeutet eine erhebliche Reduzierung der Wartungsarbeiten, ohne dass dafür Zugeständnisse an eine effiziente Verhinderung oder Reduzierung des Zylinderpolierens vonnöten sind.

Bevorzugt weist der Kolben ein Kolbenoberteil (Feuersteg) und ein Kolbenunterteil auf, wobei das Kolbenoberteil einen im Vergleich zum Kolbenunterteil reduzierten Durchmesser aufweist. Somit berührt das Kolbenoberteil während der Hubbewegung des Kolbens nur die Zylinderkopfdichtung, nicht aber die Lauffläche des Zylindereinsatzes, sodass selbst dann, wenn es zu geringfügigen Ablagerungen am Feuersteg kommt, keine nachteiligen Auswirkungen auf die Lauffläche bzw. den darauf befindlichen Ölfilm resultieren.

Um den durch die Zylinderkopfdichtung bewirkten Abstreifeffekt noch zu verstärken, ist es vorteilhaft, wenn die Zylinderkopfdichtung auf ihrer dem Kolben zugewandten Begrenzungsfläche eine Profilierung aufweist. Diese umfasst beispielsweise Rillen oder Nuten oder ein Gewinde.

Die Zylinderkopfdichtung ist vorzugsweise aus einem abriebfesten Material hergestellt, um eine lange Lebensdauer und einen langen Erhalt der abstreifenden Wirkung zu gewährleisten. Insbesondere eignen sich Gussmaterialien oder verschleissfeste Stähle.

Weitere vorteilhafte Massnahmen und bevorzugte Ausgestaltungen der Erfindung ergeben sich aus den abhängigen Ansprüchen.

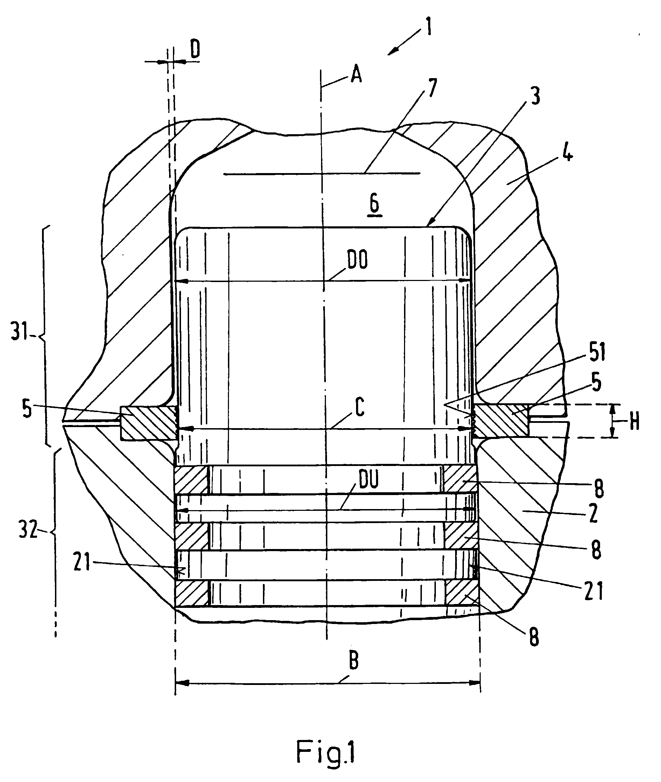

Im Folgenden wird die Erfindung anhand von Ausführungsbeispielen und anhand der Zeichnung näher erläutert. In der schematischen, nicht massstäblichen Zeichnung zeigt die einzige Figur, nämlich
- Fig. 1:: eine Längsschnittdarstellung der wesentlichen Teile eines Ausführungsbeispiels des erfindungsgemässen Zylinders.

Fig. 1 zeigt in einer Längsschnittdarstellung für das Verständnis der Erfindung wesentlichen Teile eines Ausführungsbeispiels eines erfindungsgemässen Zylinders, der gesamthaft mit dem Bezugszeichen 1 bezeichnet ist. Der Zylinder 1 ist hier Teil eines Grossdieselmotors, der nach dem Zweitakt-Verfahren mit Längsspülung arbeitet. Solche Grossdieselmotoren dienen z. B. als Antriebsaggregate für Schiffe. Der erfindungsgemässe Zylinder kann natürlich auch für einen Viertakt-Grossdieselmotor oder allgemein für eine Brennkraftmaschine eines anderen Typs ausgestaltet sein.

Der Zylinder 1 mit der Längsachse A umfasst einen in Fig. 1 nur angedeuteten Zylindereinsatz (Liner) 2, der einen Innendurchmesser B aufweist, welcher üblicherweise als Bohrung des Zylinders 1 bezeichnet wird. Die innenliegende Begrenzungsfläche des Zylindereinsatzes 2 bildet eine Lauffläche 21 für einen hin- und herbewegbaren Kolben 3. Der Kolben 3 ist in an sich bekannter, in Fig 1 nicht dargestellter Weise über eine Kolbenstange mit einem Kreuzkopf verbunden, der andererseits über eine Schubstange mit der Kurbelwelle der Brennkraftmaschine verbunden ist. Falls der Zylinder 1 für einen Viertakt-Grossdieselmotor ausgestaltet ist, ist der Kolben 3 direkt über eine Pleuelstange mit der Kurbelwelle verbunden.

Bei dem Ausführungsbeispiel nach Fig. 1 weist der Kolben 3 ein üblicherweise als Feuersteg bezeichnetes Kolbenoberteil 31 mit einem Durchmesser DO sowie ein Kolbenunterteil 32 mit einem Durchmesser DU auf, die bezüglich der Längsachse A benachbart angeordnet sind. Der Durchmesser DU des Kolbenunterteils 32 ist im wesentlichen, das heisst bis auf eine für die Beweglichkeit des Kolbens 3 nötige Passung, gleich dem Innendurchmesser B des Zylindereinsatzes 2. Der Durchmesser DO des Kolbenoberteils 31 ist um einen Betrag von zwei mal D kleiner als der Durchmesser DU des Kolbenunterteils 32 bzw. als der Innendurchmesser B des Zylindereinsatzes 2. Am Kolben 3, speziell am Kolbenunterteil 32, sind in an sich bekannter Weise mehrere Kolbenringe 8 vorgesehen, welche den Kolben 3 nach unten abdichten.

In Richtung der Längsachse A gesehen schliesst ein nur teilweise dargestellter Zylinderdeckel 4 den Zylinder 1 ab. Zwischen dem Zylinderdeckel 4 und dem Zylindereinsatz 2 ist eine im wesentlichen ringförmige Zylinderkopfdichtung 5 mit einem Innendurchmesser C vorgesehen, welche die Stossstelle zwischen dem Zylinderdeckel 4 und dem Zylindereinsatz 2 abdichtet. Im Innern des Zylinders 1 befindet sich ein Brennraum 6, welcher von der darstellungsgemäss oberen Stirnfläche des Kolbens 3 und vom Zylinderdeckel 4 begrenzt wird, und in welchem im Betriebszustand die Verbrennung des Brennstoffs, beispielsweise Schweröl, stattfindet.

In Fig. 1 nur symbolisch angedeutet ist ein Auslassventil 7, durch welches die Verbrennungsgase aus dem Brennraum 6 austreten können. Weitere hinlänglich bekannte Komponenten, wie beispielsweise die Brennstoffeinspritzdüsen, sind in Fig. 1 nicht gezeigt.

In Fig. 1 ist der Kolben 3 in seinem oberen Totpunkt dargestellt, das heisst in der Position, in welcher das Volumen des Brennraums minimal ist.

Erfindungsgemäss ist der Innendurchmesser C der Zylinderkopfdichtung 5 kleiner als der Innendurchmesser B des Zylindereinsatzes 2. Folglich ragt die Zylinderkopfdichtung 5 über die Lauffläche 21 hinaus in den Innenraum des Zylindereinsatzes 2. Vorzugsweise ist der Innendurchmesser C der Zylinderkopfdichtung 5 im wesentlichen gleich dem Durchmesser DO des Kolbenoberteils 31, sodass die Zylinderkopfdichtung 5 um den Betrag D über die Lauffläche 21 hinausragt.

Falls sich nun während des Betriebs an der radial äusseren Wand des Kolbenoberteils 31 Ablagerungen wie z. B. Verbrennungsrückstände oder Ölkohle ausbilden, so werden diese bei der Hubbewegung des Kolbens 3, also darstellungsgemäss seiner Aufwärts- oder Abwärtsbewegung, durch die vorstehende Zylinderkopfdichtung 5 abgestreift. Durch diesen von der Zylinderkopfdichtung 5 gebildeten Vorsprung ist also gewährleistet, dass selbst dann, wenn sich geringfügige Ablagerungen am Kolbenoberteil 31 ausbilden sollten, der Durchmesser des Kolbenoberteils 31 inklusive der Ablagerungen stets kleiner bleibt als der Innendurchmesser B des Zylindereinsatzes 2. Auf diese Weise wird also wirkungsvoll vermieden, dass sich die Ablagerungen an der radial äusseren Wand des Kolbenoberteils 31 bis auf den Innendurchmesser B des Zylindereinsatzes 2 aufbauen. Somit wird ein schädlicher Kontakt zwischen diesen genannten Ablagerungen und der Lauffläche 21 des Zylindereinsatzes 2 vermieden, sodass der vorne beschriebene nachteilige Effekt des Zylinderpolierens (bore-polishing) nicht auftritt.

Gemäss einer bevorzugten Ausgestaltung weist die Zylinderkopfdichtung 5 auf ihrer dem Kolben 3 zugewandten, also ihrer radial innenliegenden Begrenzungsfläche eine Profilierung 51 auf Diese Profilierung kann beispielsweise durch ein Gewinde oder durch Rillen oder durch Nuten realisiert sein. Durch die Profilierung 51 wird ein zusätzlicher Abstreifeffekt erzielt, sodass die radial äussere Wand des Kolbenoberteils 31 bei der Kolbenhubbewegung noch besser von Ablagerungen befreit wird.

Vorzugsweise ist die Zylinderkopfdichtung 5 aus einem abriebfesten Material hergestellt, insbesondere aus einem Gussmaterial oder einer Stahllegierung.

Die Höhe H der Zylinderkopfdichtung 5, das heisst ihre Ausdehnung in Richtung der Längsachse A, hängt von der Art der Brennkraftmaschine ab. Für den Zylinder 1 eines Grossdieselmotors, beispielsweise, kann die Höhe zwischen 15 mm und 30 mm betragen.

Die erfindungsgemässe Verwendung der Zylinderkopfdichtung 5 zum Abstreifen von Ablagerungen am Kolben 3 der Brennkraftmaschine hat insbesondere den Vorteil, dass durch ein sowieso vorhandenes Bauteil, nämlich die Zylinderkopfdichtung 5, eine zusätzliche Funktion, nämlich das Verhindern des Zylinderpolierens, realisiert wird. Folglich bedarf es für ein effizientes Verhindern oder zumindest Reduzieren des Zylinderpolierens keiner zusätzlichen Bauteile oder baulicher Massnahmen am Zylinder. Neben der Reduzierung des Aufwands bringt dies den Vorteil mit sich, dass auch konventionelle Brennkraftmaschinen, insbesondere Grossdieselmotoren, problemlos auf die erfindungsgemässe Lösung umgerüstet werden können. Bei Wartungs- oder Revisionsarbeiten kann einfach die alte Zylinderkopfdichtung durch eine neue mit reduziertem Innendurchmesser C ersetzt werden, um so zu einem erfindungsgemässen Zylinder zu gelangen. Gegebenenfalls muss dabei das Kolbenoberteil und der Zylinderkopf nachgedreht werden. Dies ist insbesondere für solche Motoren vorteilhaft, bei denen noch keine Massnahmen zum Verhindern des Zylinderpolierens getroffen wurden, bzw. bei denen noch keine entsprechenden Vorrichtungen vorhanden sind. Diese lassen sich in einfacher Weise, nämlich durch Austauschen der Zylinderkopfdichtung und gegebenenfalls Nacharbeiten des Zylinderkopfs sowie des Kolbenoberteils, nachrüsten, um zukünftig das Zylinderpolieren wirkungsvoll zu vermeiden oder zumindest zu reduzieren.

Ein weiterer Vorteil der Verwendung der Zylinderkopfdichtung 5 als "Anti-bore-polishing-Vorrichtung" ist darin zu sehen, dass die Zylinderkopfdichtung 5 nach Demontage des Zylinderdeckels 4 in aller Regel lose und nicht eingebacken ist. Sie kann also in sehr einfacher Weise ausgetauscht werden. Auch ist bei Revisionsarbeiten ein mühsames und aufwendiges Entfernen der Ablagerungen, speziell der Ölkohle, nicht mehr notwendig. Die Zylinderkopfdichtung 5 mit den Ölkohleablagerungen wird einfach herausgenommen und durch eine neue ersetzt. Dies bedeutet insbesondere einen erheblichen Zeitgewinn bei Revisionsarbeiten.

## Patentansprüche

1. Zylinder für eine Brennkraftmaschine, insbesondere für einen Grossdieselmotor, mit einem Zylindereinsatz (2), welcher eine Lauffläche (21) für einen hin- und herbewegbaren Kolben (3) bildet, mit einem den Zylinder abschliessenden Zylinderdeckel (4), sowie mit einer zwischen dem Zylindereinsatz (2) und dem Zylinderdeckel (4) angeordneten Zylinderkopfdichtung (5), dadurch gekennzeichnet, dass der Innendurchmesser (C) der Zylinderkopfdichtung (5) kleiner ist als der Innendurchmesser (B) des Zylindereinsatzes (2).

2. Zylinder nach Anspruch 1, bei welchem der Kolben (3) ein Kolbenoberteil (31) und ein Kolbenunterteil (32) aufweist, wobei das Kolbenoberteil (31) einen im Vergleich zum Kolbenunterteil (32) reduzierten Durchmesser (DO) aufweist.

3. Zylinder nach einem der Ansprüche 1 oder 2, bei welchem die Zylinderkopfdichtung (5) auf ihrer dem Kolben (3) zugewandten Begrenzungsfläche eine Profilierung (51) aufweist.

4. Zylinder nach Anspruch 3, bei welchem die Profilierung (51) Rillen oder Nuten oder ein Gewinde umfasst.

5. Zylinder nach einem der vorangehenden Ansprüche, wobei die Zylinderkopfdichtung (5) aus einem abriebfesten Material, insbesondere einem Gussmaterial oder einem Stahl, hergestellt ist.

6. Brennkraftmaschine, insbesondere Grossdieselmotor, mit einem Zylinder (1) gemäss einem der vorangehenden Ansprüche.

7. Verwendung einer Zylinderkopfdichtung (5) zum Abstreifen von Ablagerungen an einem Kolben (3) einer Brennkraftmaschine, insbesondere eines Grossdieselmotors.
